# EUROPEAN PATENT APPLICATION

(11) **EP 1 074 532 A2**
(43) Date of publication of application: **07.02.2001**
(21) Application number: 00306630.5
(22) Date of filing: 03.08.2000
(51) Int. Cl.: C05F 17/00, C05F 9/04, C12N 1/38

(54) **Composting additive**

(30) Priority: 06.08.1999 GB 9918492
(71) Applicant: Thomas & Fontaine Limited, Craven Arms, Shropshire SY7 8HN (GB)
(72) Inventor: Godwin-Thomas, Dianne, Monmouth, Monmouthshire NP25 5HR (GB); Thomas, Gerard, Monmouth, Monmouthshire NP25 5HR (GB)
(74) Representative: Pearce, Anthony Richmond

(57) **Abstract**

The present invention provides a composting additive which is adapted for use in the composting of organic matter having a relatively low carbon/nitrogen ratio (eg. grass clippings). The additive is in the form of discrete pieces, has a relatively high carbon/nitrogen ratio and comprises as a major component a cellulose-based material which has been chemically pre-treated so as to enhance the biodegradability of the cellulose contained therein.

The present invention also provides a process for manufacturing such an additive and a method of composting using the additive.

## Description

The present invention relates to a composting additive. In particular, the present invention relates to a composting additive for use in the composting of organic matter having a relatively low carbon/nitrogen ratio.

Composting is the aerobic transformation of organic matter into humic substances. It is a natural process which occurs in soil, farmyard manures and on the forest floor with the production of leaf mould. Composting can be artificially hastened by gathering the organic matter together to form a heap often in a container so as to conserve the metabolic heat of the microbial biomass. This enhanced process has three stages:-
1. A thermophilic stage which involves an initial rapid growth of the microbial population sustained by simple sugar compounds. The temperature rapidly rises to between 60 and 70°C.
2. A mesophilic stage in which the temperature falls to between about 25°C and 45°C due to the inhibition of the various thermophilic bacteria, fungi and actinomycetes at the high temperatures obtained during the thermophilic stage. At this stage, the biomass is sustained by the breakdown of cellulose and hemicellulose.
3. A maturation stage which is the final stage in composting and which is characterised by the breakdown of lignin by the higher fungi.

To optimise the efficiency of the composting process, several factors are important:-
1. High aeration (i.e. oxygen concentration greater than 10%).
2. A short thermophilic stage followed by a well-maintained mesophilic stage.
3. A correctly balanced moisture content (approximately 40 to 60%).
4. A balanced carbon/nitrogen ratio. Old plant tissue is high in carbonaceous material but low in nitrogen, whereas young green plant material is higher in nitrogen and also water. An experienced composter will try to balance the carbon/nitrogen ratio by forming the compost heap from a suitable mixture of starting materials.
5. A pH of between about 5.5 and 8.

Grass clippings which have a low carbon/nitrogen ratio and high moisture content are notoriously difficult to make into compost. Alone, they usually produce a foul-smelling black slime rather than a friable compost. This is caused by:-
a) excessive nitrogen producing ammonia gas, and/or
b) inadequate porosity due to the small particle size of the grass clippings combined with their high moisture content and low cell wall lignification. This results in a rapid collapse of the compost heap structure with a concomitant increase in its bulk density. This consolidation, combined with leakage of cell content, causes the size and number of pores within the compost mass to be reduced and those remaining to be filled with water thus leading to the establishment of anaerobic conditions.

One method of improving the carbon/nitrogen ratio is to mix a high carbon content material, e.g. shredded newspaper or straw, with the grass clippings. A disadvantage of this method is that relatively large amounts of newspaper or straw are required.

Commercially available compost additives have been developed for use with high carbon/nitrogen ratio substrates. They therefore usually contain a nitrogen source (e.g. ammonium nitrate) and low levels of cellulolytic enzymes. They are of no benefit for the composting of grass clippings and other low carbon/nitrogen ratio substrates.

It is an object of the present invention in a first aspect to provide a composting additive specifically adapted for use with grass clippings and/or other organic substrates having a low carbon/nitrogen ratio.

According to a first aspect of the present invention, there is provided a composting additive adapted for use in the composting of organic matter having a relatively low carbon/nitrogen ratio, wherein said additive (i) is in the form of discrete particles, (ii) has a relatively high carbon/nitrogen ratio and (iii) comprises as a major component a cellulose-based material which has been chemically pre-treated so as to enhance the biodegradability of the cellulose contained therein.

As defined herein, a relatively low carbon/nitrogen ratio is less than about 20, and a relatively high carbon/nitrogen ratio is more than about 50. Ratios are expressed as a single number so that a carbon/nitrogen ratio of 30 corresponds to a carbon:nitrogen ratio of 30:1.
Preferably, said cellulose-based material is a lignocellulosic material, examples of which include straws (e.g. barley, oat and wheat straw), wood chips, wood shavings, sawdust and paper (newspaper, cardboard etc). More preferably, said lignocellulosic material is wheat straw.

Preferably, said cellulose-based material is one which has been chemically pre-treated to remove at least a portion of the lignin in the lignocellulosic material and thereby increase the biodegradability of the cellulose.

The additive preferably also includes a composting accelerator, e.g. at least one enzyme, to accelerate the composting process and may further include a surfactant (e.g. lecithin) to enhance the spread of the accelerator within the compost mass. Useful enzymes include fungal enzymes i.e. those isolated from fungi, eg. *Humicola insolens*, which act on plant material to make simple sugars, pectin, hemicellulose and cellulose available to the micro-organisms naturally present in the compost heap. The composting accelerator is preferably carried by the chemically pre-treated cellulose-based material.

According to a second aspect of the present invention there is provided a process for the manufacture of an additive in accordance with said first aspect, comprising the steps of
(i) chemically treating a lignocellulosic material so as to remove at least a portion of lignin therefrom,
(ii) shaping the treated material into discrete pieces, and
(iii) applying a composting accelerator to the surfaces of said discrete pieces.

Step (i) of the process may be effected by the use of an alkaline solution, such as a group I or II metal hydroxide solution or an ammonia or urea solution. Preferably said solution is a sodium hydroxide, potassium hydroxide or calcium hydroxide solution (sodium hydroxide being more preferred). Preferably, said solution is strongly alkaline (e.g. 50% w/v of sodium hydroxide in water).

When an alkaline solution is used, step (i) preferably includes a step of mechanical working a mixture of the lignocellulosic material and alkaline solution (e.g. stirring).

Step (ii) of the process may be effected by extrusion and/or pelletisation, optionally followed by shredding. Such extrusion or pelletisation may replace or supplement any mechanical working in step (i).

Step (iii) of the process may be effected by intimate mixing or spraying so as to coat said discrete pieces with said composting accelerator.

According to a third aspect of the present invention, there is provided a method of composting organic matter having a relatively low carbon/nitrogen ratio comprising the steps of:-
(i) forming said organic matter having a relatively low carbon/nitrogen ratio into a heap, and
(ii) adding to the heap a predetermined quantity of the composting additive in accordance with the first aspect of the present invention so as to produce a heap having a balanced carbon/nitrogen ratio and optimised moisture content.

Step (ii) may be effected before, during or after step (i).

Preferably, the additive is added in step (ii) in the form of discrete pieces such as shreds or pellets so as to increase the porosity of the heap.

Preferably, the predetermined quantity referred to step (ii) is about 1-6 kg / 10 kg of the organic matter and more preferably about 3-5 kg or 2-4kg/ 10 kg of the organic matter.

Preferably, steps (i) and (ii) are performed so that the balanced carbon/nitrogen ratio of the heap is about 30 and more preferably so that the moisture content is about 40 to 70 % by weight, most preferably about 60% by weight. Step (ii) may be effected by mixing the additive with the organic matter or by forming one or more layers of additive on and/or in the organic matter.

Embodiments of the present invention will now be described by way of example with reference to the accompanying drawings in which:-
Figs 1, 3 and 4 are compost temperature profiles for grass clippings composted according to methods of the present invention or by a control method, and
Fig 2 shows part of Fig 1 with an expanded time axis.

### Preparation of Composting Additive

Wheat straw was mixed with a 50% w/v aqueous solution of sodium hydroxide (30% by weight of wheat straw in the mixture). After initial mixing, the mixture was allowed to stand for 1 hour (in other embodiments the lignocellulosic material may be left to stand for 0 to 5 hours). After this, the straw was separated from the solution and passed through an extruder and formed into pellets. The extrusion step raises the temperature of the mixture to about 60°C or higher and breaks down the lignocellulosic material. In alternative embodiments, the mixture may be vigorously stirred before being shaped so as to generate the necessary heat.

The resultant pellets were shredded and either used directly (Ex 1) or sprayed with an aqueous solution of composting accelerator (Ex 2) having the following composition:-
(i) BioFeed Plus (produced from *Humicola insolens*) - a carbohydrase preparation containing endo-1,4 ß-xylanase (11700 FXU) and ß-glucanase (1463 FBG) activities as well as cellobiase, hemicellulase and cellulase.
(ii) Celluclast (produced from *Trichoderma reesei*) - a cellulase preparation (9600 NCU) having a pronounced viscosity reducing effect.
(iii) Energex (produced from *Aspergillus niger*) - a multi-enzyme complex having fungal ß-glucanase, hemicellulase (1440000 VHCU), pectinase (96000 PSU) and endoglucanase activities.
(iv) Lecithin (Metarin P supplied by Lucas Meyer).

Biofeed Plus, Celluclast and Energex are supplied by Novo Nordisk A/S.

The optimal combination of these enzymes was found to be a 3:1:1 blend of BioFeed Plus:Celluclast:Energex applied in the following quantities per 4 kg of shredded additive:-
- Lecithin: 2 g
- BioFeed Plus: 18 ml
- Celluclast: 6 ml
- Energex: 6 ml

The additive is allowed to dry before being used to compost grass clippings. The shredded additive increases the porosity and lowers the bulk density of the compost, thereby promoting aerobic conditions.

### Experiment 1

### Preparation of compost heap

Compost heaps were made up of grass alone (C1), grass and NaOH treated wheat straw (Ex1) and NaOH treated wheat straw coated with the enzyme and surfactant mixture described above (Ex2). The heaps were formed by mixing the additive in the form of shreds to grass clippings (4 kg additive to every 10 kg of grass clippings). The mixture was added to a compost bin (1m³). Final quantities in the compost bins were 70 kg grass, 70 kg grass + 28 kg additive, and 70 kg grass + 28 kg enzyme-coated additive. Each compost bin was covered with a plastic sheet and temperatures recorded at regular intervals. Each compost was mixed after 260 hours and then 422 hours.

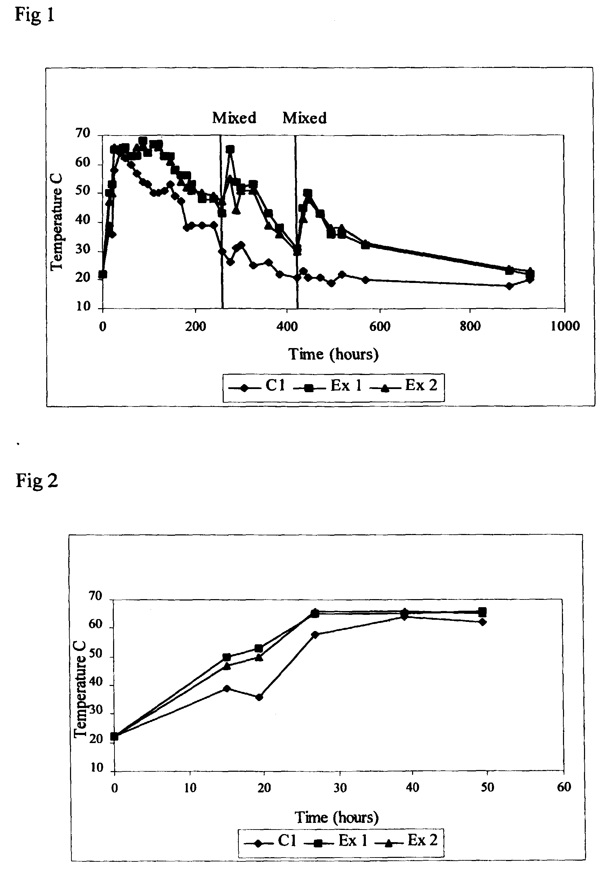

Referring to figures 1 and 2, it can be seen that the composting process according to the present invention results in a faster microbial reaction rate as shown by the more rapid initial rise in temperature (figure 2). Both Ex1 and Ex2 composts reached a temperature above 60 °C 12 hours before the control compost (C1). The control compost (C1) maintained a temperature above 60 °C for just over 24 hours. Both Ex 1 and Ex 2 composts maintained temperatures above 60 °C for over 5 days. This thermophilic phase is essential to cause a significant reduction in pathogens during composting. After 11 days both Ex1 and Ex2 composts were above 40 °C whereas the control compost (C1) had dropped to 30 °C.

Both Ex1 and Ex2 composts increased in temperature when mixed. This is because the additive used in both Ex1 and Ex2 makes the compost more friable and gives it a more open structure. This allows any available carbon to be utilised by the aerobic microbial population. The grass only compost (C1) was much denser making mixing very difficult. This, coupled with the lack of available carbon prevented an increase in temperature.

The benefit of the composting accelerator can be seen from Table 1, which shows the percentage of grass (wet weight) remaining after composting for 4 days under thermophilic conditions (50 °C) with no composting accelerator (Sample A) or with composting accelerator (Sample B), for clippings having different moisture contents. In all cases, there was significantly less wet mass when the additive was coated with the enzymes. The greatest activity of the accelerator is against young grass with low lignocellulose content, which is usually grass with the highest moisture content (i.e. lowest dry matter content). This is because lignocellulose cannot be broken down by the action of fibrolytic enzymes present in the accelerator.

**Table 1**

| Sample | Grass Substrate (% moisture) | | |
|---|---|---|---|
| | 88 | 80 | 75 |
| | % of grass remaining (wet weight) | | |
| A | 34.6 | 79.0 | 79.0 |
| B | 19.1 | 48.3 | 40.5 |

As further evidence of the benefit of the present invention, C/N ratios were measured for the C1, Ex1 and Ex2 composts (Table 2). As composting proceeds the C/N ratio gradually decreases in the case of the Ex1 and Ex2 composts from the optimum of 30, to 10-15 for the finished mature product. The Ex2 compost matured faster than the Ex1 compost and had reached a C/N ratio of 12.4 after 69 days compared with 24.9 for the Ex1 compost after the same period. After 251 days both of these composts were mature. In contrast, the control compost (C1) had an initial C/N ratio of 14.5 and a final C/N ratio of 8.8, by which time the material had putrefied.

**Table 2**

| Effect of Treatment on Compost Maturity | | | |
|---|---|---|---|
| | Time (Days) | | |
| | 0 | 69 | 251 |
| Control | 14.5 | 8.7 | 8.8 |
| Ex 1 | 30.2 | 24.9 | 12.9 |
| Ex 2 | 30.2 | 12.4 | 12.2 |

### Experiment 2

This experiment was conducted in a similar manner to experiment 1. The heaps were formed by mixing the additive (NaOH-treated straw with enzyme and surfactant prepared as for the Ex2 compost above) in the form of shreds to grass clippings. The additive was added at 3 rates: 2, 3 and 4 kg to every 10 kg of grass clippings (Ex3, Ex4 and Ex5 respectively). Final quantities in the compost bins were 70 kg grass (C1), 70 kg grass + 14 kg additive (Ex3), 70 kg grass + 21 kg additive (Ex4) and 70 kg grass + 28 kg additive (Ex5). Each compost bin was covered with a plastic sheet and temperatures recorded at regular intervals.

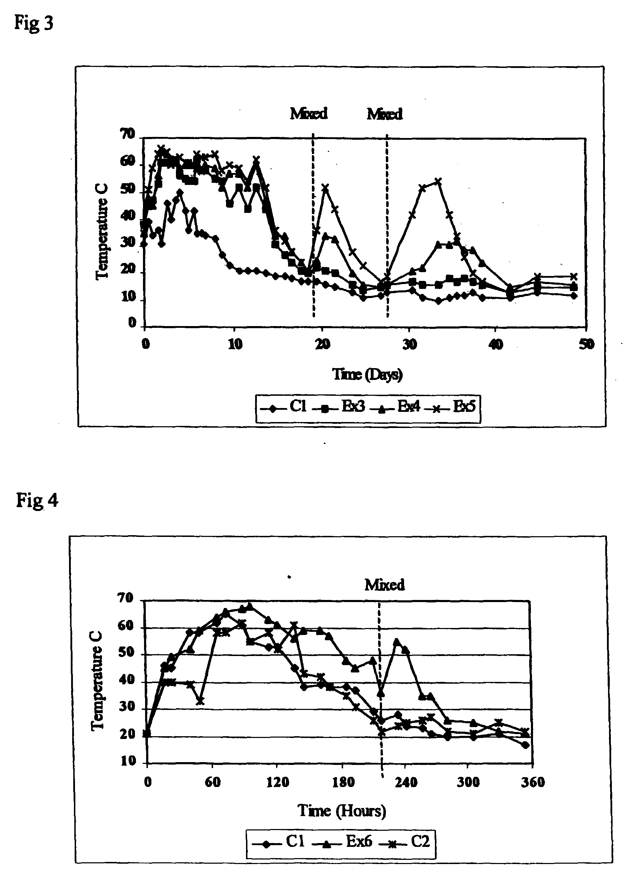

Figure 3 shows that the additive in accordance with the present invention, at all rates of application, showed a more rapid and prolonged peak heating than the control. The composts (Ex3-5 reached temperatures 12 - 15 °C higher than the control (C1). The peak temperatures achieved by application of the additive were directly related to application rate; per 10 kg of grass, 2 kg of additive (Ex3) was slightly cooler than 3 kg (Ex4), which was cooler than 4 kg (Ex5). All Examples produced acceptable, non-odorous compost that was faster maturing and pleasant to handle compared with the unpleasant black slimy control (C1).

Post-mixing heating (mixing after 18.5 and 27.5 days) was associated with the treated composts (Ex3-5) being friable with a more open structure. This allows any available carbon to be utilised by the aerobic microbial population, the higher temperatures being associated with greater amounts of available carbon. Although friable and having an open texture, the Ex3 compost did not produce a peak after the second mixing. This indicates that all the available carbon had been utilised and the compost had entered the maturation phase.

### Experiment 3

This experiment was designed to compare the additive used in Ex3-5 (NaOH treated straw +enzyme/surfactant) with a similar quantity of untreated straw. The experiment was performed in a similar manner to Experiment 1. The additive was added at 2 kg to every 10 kg grass clippings (Ex6). Untreated wheat straw was also added at the rate of 2 kg to every 10 kg grass clippings (C2). Final quantities in the compost bins were 70 kg grass (control C1), 70 kg grass + 14 kg additive (Ex6) and 70 kg grass + 14 kg untreated wheat straw (C2). Each compost bin was covered with a plastic sheet and temperatures recorded at regular intervals.

Figure 4 shows that the Ex6 compost produced a higher peak temperature that was more prolonged than the C1 compost. Untreated straw alone (C2 compost) produced a slower rate of heating than either the C1 or Ex6 compost: after 2 days the C2 compost was at 33 °C compared with C1 compost at 58 °C and the Ex6 compost at 59 °C.

After 9 days each compost was mixed and the Ex 6 compost produced an increase in temperature. This was due to the compost being friable with a more open structure. This allows available carbon to be utilised by the aerobic microbial population. Although having an open texture, the C2 compost did not produce a peak after mixing because there was no available carbon.

Untreated straw combined with grass clippings (C2 compost) produces a very bulky mixture that does not compost rapidly. The initial volume of straw and grass in this experiment was 0.729 m³ compared with 0.446 m³ for the C1 compost and 0.437 m³. for the Ex6 compost. After 18 days the C2 compost had decreased in volume by 28 % and the Ex6 compost by 54 %. The C1 compost had decreased in volume by 76 % but had become a dense unpleasant black slimy mass.

As previously mentioned, an ideal carbon/nitrogen ratio for composting is generally about 30. As can be seen from Table 3, 6 kg of untreated wheat straw is required to obtain this ideal carbon/nitrogen ratio, whereas only 4 kg of the sodium hydroxide treated straw is required to produce the same ratio (based on 10 kg of grass clippings). This is due to the increase in biodegradability of the cellulose in the treated straw. This weight reduction of one third is particularly advantageous in summer when large quantities of grass clippings require composting.

**Table 3**

| Raw Material Analysis | | | | | Compost Mixture (10Kg grass) | | |
|---|---|---|---|---|---|---|---|
| | % moisture | %BC* | %N | C/N ratio | Mass additive | C/N ratio | % Moisture |
| Grass | 80 | 57.8 | 4.0 | 14.48 | - | 14.45 | 80 |
| Wheat straw | 12 | 36.6 | 0.4 | 91.5 | 6.0 Kg | 30.5 | 54.5 |
| NaOH straw | 12 | 48.0 | 0.4 | 120 | 4.0 Kg | 30.2 | 60.6 |

| | | | | | | | |
|---|---|---|---|---|---|---|---|
| (* %BC = percentage of carbon in biodegradable form) | | | | | | | |

## Claims

1. A composting additive adapted for use in the composting of organic matter having a relatively low carbon/nitrogen ratio, wherein said additive (i) is in the form of discrete pieces, (ii) has a relatively high carbon/nitrogen ratio and (iii) comprises as a major component a cellulose-based material which has been chemically pre-treated so as to enhance the biodegradability of the cellulose contained therein.

2. A composting additive as claimed in claim 1, wherein said cellulose-based material is a lignocellulosic material.

3. A composting additive as claimed in claim 2, wherein, said lignocellulosic material is at least one material selected from the group consisting of barley, oat and wheat straws, wood chips, wood shavings, sawdust and paper.

4. A composting additive as claimed in claim 2 or 3, wherein said cellulose-based material is one which has been chemically pre-treated to remove at least a portion of the lignin in the lignocellulosic material.

5. A composting additive as claimed in any preceding claim which also includes a composting accelerator comprising at least one enzyme, preferably a fungal enzyme.

6. A composting additive as claimed in claim 5, wherein said composting accelerator comprises at least one enzyme preparation selected from the group consisting of:-
(i) an enzyme preparation derived from *Humicola insolens*, having endo-1,4 ß-xylanase, ß-glucanase, cellobiase, hemicellulase and cellulase activities,
(ii) an enzyme preparation derived from *Trichoderma reesei*, having cellulase activity, and
(iii) an enzyme preparation derived from *Aspergillus niger*, having ß-glucanase, hemicellulase, pectinase and endoglucanase activities.

7. A process for the manufacture of an additive in accordance with claim 5 or 6, comprising the steps of:-
(i) chemically treating a lignocellulosic material so as to remove at least a portion of lignin therefrom,
(ii) shaping the treated material into discrete pieces, and
(iii) applying a composting accelerator to the surfaces of said discrete pieces.

8. A manufacturing process as claimed in claim 7, wherein step (i) is effected by the use of an alkaline solution, preferably a group I or II metal hydroxide solution, an ammonia solution or a urea solution.

9. A manufacturing process as claimed in claim 8, wherein said solution is an aqueous sodium hydroxide, potassium hydroxide or calcium hydroxide solution.

10. A manufacturing process as claimed in any one of claims 7 to 9, wherein step (ii) is effected by extrusion and/or pelletisation, optionally followed by shredding.

11. A manufacturing process as claimed in any one of claims 7 to 10, wherein step (iii) is effected by intimate mixing or spraying so as to coat said discrete pieces with said composting accelerator.

12. A method of composting organic matter having a relatively low carbon/nitrogen ratio comprising the steps of:-
(i) forming said organic matter having a relatively low carbon/nitrogen ratio into a heap, and
(ii) adding to the heap a predetermined quantity of the composting additive in accordance with any one of claims 1 to 6, so as to produce a heap having a balanced carbon/nitrogen ratio and optimised moisture content.

13. A composting method in accordance with claim 12, wherein the predetermined quantity referred to step (ii) is from 1 to 6 kg per 10 kg of the organic matter, and preferably from 3 to 5 or 2 to 4 kg per 10 kg of the organic matter.

14. A composting method in accordance with claim 12 or 13, wherein steps (i) and (ii) are performed so that the balanced carbon/nitrogen ratio of the heap is about 30.
